# FASCICULE DE BREVET EUROPEEN

(11) **EP 1 953 884 B1**
(45) Date de publication et mention de la délivrance du brevet: **27.07.2011**
(21) Numéro de dépôt: 08290084.6
(22) Date de dépôt: 30.01.2008
(51) Int. Cl.: H02G 1/12

(54) **Appareil pour la découpe d'un corps allongé, tel qu'un câble multicouches concentriques**
Gerät zum Ausschneiden eines länglichen Körpers, wie beispielsweise eines konzentrischen Mehrschichtenkabels
Device for cutting an elongated body such as a cable with multiple concentric layers

(30) Priorité: 31.01.2007 FR 0700649
(43) Date de publication de la demande: 06.08.2008
(73) Titulaire: Roux, Didier, 72190 Neuville Sur Sarthe (FR)
(72) Inventeur: Roux, Didier, 72190 Neuville Sur Sarthe (FR)
(74) Mandataire: Laget, Jean-Loup

(56) Documents cités:
- EP-A- 0 524 121
- US-A- 3 216 110
- US-A- 3 722 092
- US-B1- 6 308 417

## Description

La présente invention concerne un appareil pour la découpe, l'entaille ou le dénudage au moins partiel d'un corps allongé, tel que décrit dans le préambule de la revendication 1.

De tels appareils sont bien connus à ceux versés dans cet art comme l'illustre l'état de la technique le plus proche formé par les brevets US-6.308.417 et US-3.722.092 qui décrivent un appareil de coupe équipé d'un outil de coupe de type couteau à déplacement axial alternatif. L'inconvénient d'un outil de coupe linéaire par rapport à un outil de coupe rotatif est qu'il ne peut trancher que des gaines de faible dureté et de faible épaisseur. En outre, en coupe longitudinale, l'absence de rotation de l'outil empêche l'avance de l'outil sur l'élément à découper.

Pour les raisons mentionnées ci-dessus, les appareils de coupe à outil de coupe rotatif sont préférés.

Le problème est que, jusqu'à présent, pour de tels appareils, lorsqu'on souhaite pouvoir réaliser des coupes à la fois longitudinale et circulaire, il est nécessaire de desserrer les mâchoires pour passer d'une position de coupe à une autre. Ainsi, dans l'exemple illustré dans le brevet US-3.216.110, le passage d'une position de coupe à une autre s'opère par modification de la position du guide de câble porté par la mâchoire exempte d'organe de coupe. L'organe de coupe circulaire est donc monté fixe en position sur sa mâchoire. En effet, jusqu'à présent, il n'est pas envisagé de déplacer l'outil de coupe rotatif qui est difficile à déplacer en raison de la présence de son organe d'entraînement en rotation et de l'encombrement généré par ce dernier.

Un but de la présente invention est donc de proposer un appareil pour la découpe, l'entaille et/ou le dénudage ou moins partiel d'un corps allongé, dont la conception permet d'amener l'outil de coupe circulaire rotatif d'une position de coupe à une autre sans avoir à desserrer les mâchoires enserrant le corps allongé à découper en maintenant ledit corps en position de sorte que chaque coupe peut être effectuée de manière précise.

A cet effet, l'invention a pour objet un appareil pour la découpe, l'entaille ou le dénudage au moins partiel d'un corps allongé, tel qu'un câble multi couches concentriques, en particulier un câble électrique gainé, présentant en surface au moins une couche à découper, entailler ou dénuder, ledit appareil et le corps allongé à découper étant animés au moins d'un mouvement relatif de rotation et/ou de translation, ledit appareil comprenant au moins deux mâchoires délimitant un logement de passage du corps allongé dans lequel ledit corps est positionné axialement, et au moins un porte-outil à outil de coupe, cet outil de coupe, monté mobile sur l'une des mâchoires, étant, à l'état stationnaire desdites mâchoires, apte à être entraîné en déplacement d'une part, entre une position dans laquelle le tranchant de l'outil de coupe s'étend en retrait ou en affleurement dudit logement et une position dans laquelle le tranchant de l'outil de coupe s'étend en saillie à l'intérieur dudit logement, d'autre part, entre une position dite de coupe circulaire dans laquelle le tranchant de l'outil de coupe est orthogonal à l'axe longitudinal du corps allongé à inciser ou à trancher, et une position dite de coupe longitudinale dans laquelle le tranchant de l'outil de coupe est parallèle à l'axe longitudinal du corps allongé, caractérisé en ce que l'outil de coupe est un outil de coupe circulaire rotatif qui, en position de coupe longitudinale, est entraîné en rotation par un arbre rotatif dit arbre d'entraînement de l'outil, tel qu'un arbre de manivelle, cet arbre étant, avec le porte-outil et l'outil de coupe, monté, à l'état stationnaire des mâchoires, mobile suivant un axe orthogonal à l'axe de rotation de l'outil de coupe pour le passage de l'outil de coupe d'une position dans laquelle le tranchant de l'outil de coupe s'étend en retrait ou en affleurement dudit logement à une position dans laquelle le tranchant de l'outil de coupe s'étend en saillie à l'intérieur dudit logement et inversement, cet arbre rotatif étant en outre un arbre débrayable, mobile axialement suivant une direction parallèle à l'axe de rotation dudit arbre entre une position débrayée dans laquelle le porte-outil et l'outil de coupe sont montés, indépendamment de l'arbre, mobiles en déplacement angulaire autour d'un axe perpendiculaire à l'axe de rotation de l'organe de coupe pour le passage d'une position de coupe à une autre, et une position embrayée dans laquelle l'arbre est en prise, avec le porte-outil, en position de coupe circulaire dudit outil de coupe, et avec l'outil de coupe, en position de coupe longitudinale dudit outil de coupe.

Grâce au choix d'un outil de coupe rotatif, il en résulte les avantages d'ores et déjà mentionnés ci-dessus.

Grâce à la conception de l'appareil et en particulier au fait que l'outil de coupe peut être déplacé indépendamment des mâchoires, il est possible, à l'état enserré du corps allongé par lesdites mâchoires, de retirer l'outil de coupe du passage pour permettre ensuite le déplacement de l'outil d'une position de coupe à une autre, avant de réintroduire le tranchant de l'outil de coupe dans ledit passage pour procéder à une nouvelle coupe, sans avoir fait varier le positionnement relatif entre mâchoires et corps allongé à découper ou à entailler, au cours du passage de l'outil de coupe d'une position à une autre.

Il en résulte une augmentation de la précision des opérations de coupe réalisées.

De préférence, l'outil de coupe circulaire rotatif est, en position de coupe longitudinale, entraîné en rotation par un arbre rotatif dit arbre d'entraînement de l'outil, tel qu'un arbre de manivelle, cet arbre rotatif étant, avec le porte-outil et l'outil de coupe, monté, à l'état stationnaire des mâchoires, mobile suivant un axe orthogonal à l'axe de rotation de l'outil de coupe pour le passage de l'outil de coupe d'une position dans laquelle le tranchant de l'outil de coupe s'étend en retrait ou en affleurement dudit logement à une position dans laquelle le tranchant de l'outil de coupe s'étend en saillie à l'intérieur dudit logement et inversement, cet arbre rotatif étant en outre un arbre débrayable, mobile axialement suivant une direction parallèle à l'axe de rotation dudit arbre entre une position débrayée dans laquelle le porte-outil et l'outil de coupe sont montés, indépendamment de l'arbre, mobiles en déplacement angulaire autour d'un axe perpendiculaire à l'axe de rotation de l'organe de coupe pour le passage d'une position de coupe à une autre, et une position embrayée dans laquelle l'arbre est en prise avec le porte-outil, en position de coupe circulaire dudit outil de coupe, et avec l'outil de coupe, en position de coupe longitudinale dudit outil de coupe.

Le mouvement axial de l'arbre d'entraînement en rotation de l'outil et le montage solidaire en déplacement de l'arbre avec l'outil et le porte-outil lors du réglage de la profondeur de travail permettent de disposer d'un appareil à outil de coupe rotatif présentant les mêmes avantages de non desserrage des mâchoires qu'un appareil à outil de coupe alternatif.

Selon une forme de réalisation préférée de l'invention, en position embrayée, l'arbre rotatif forme un verrouillage en déplacement angulaire du porte-outil et de l'organe de coupe autour de l'axe perpendiculaire à l'axe de rotation de l'outil de coupe circulaire rotatif et un organe de retenue du porte-outil et de l'organe de coupe dans la position de coupe choisie.

Grâce à cette disposition, l'arbre d'entraînement en rotation de l'outil de coupe est un arbre polyvalent qui remplit en position embrayée à la fois une fonction de verrou angulaire et de maintien en position du porte-outil quelle que soit la position occupée par ce dernier et une fonction d'entraînement en rotation dudit outil en position de coupe longitudinale dudit outil. En d'autres termes, en position débrayée, l'arbre d'entraînement en rotation de l'outil autorise le passage du porte-outil et de l'outil de coupe associé de la position de coupe circulaire à la position de coupe longitudinale et inversement alors qu'en position embrayée, il forme, par coopération avec le porte-outil, un verrou du porte-outil et de l'outil de coupe associé immobilisant angulairement le porte-outil et l'outil de coupe dans une position de coupe choisie et forme, en position de coupe longitudinale dudit outil, par venue en prise avec l'outil de coupe, l'organe d'entraînement en rotation dudit outil.

Ainsi, l'arbre d'entraînement en rotation de l'outil ne nuit en rien au réglage de la profondeur de coupe. Les dispositions mentionnées ci-dessus permettent donc une gestion de l'arbre d'entraînement en rotation de l'outil et offrent la possibilité, à l'aide d'un outil de coupe rotatif, d'une coupe longitudinale et une coupe circulaire sans avoir à desserrer les mâchoires de l'outil.

De préférence, l'appareil comporte une poignée de manoeuvre montée libre en rotation et fixe axialement sur une mâchoire, poignée de manoeuvre et porte-outil étant équipés l'un d'un taraudage, l'autre d'un axe fileté, coopérant entre eux de manière à provoquer, en position embrayée de l'arbre d'entraînement en rotation de l'outil de coupe, un déplacement axial du porte-outil, de l'outil de coupe et de l'arbre d'entraînement en rotation de l'outil de coupe suivant l'axe perpendiculaire à l'axe de rotation de l'outil de coupe. Dans un mode de réalisation préféré, la poignée de manoeuvre est un organe de commande polyvalent asservi à la position embrayée/débrayée de l'arbre d'entraînement en rotation de l'outil de coupe, ladite poignée de manoeuvre formant, en position embrayée de l'arbre, un organe de commande d'entraînement en déplacement axial du porte-outil, de l'outil de coupe et de l'arbre suivant l'axe perpendiculaire à l'axe de rotation de l'outil de coupe et, en position débrayée de l'arbre, un organe de commande en déplacement angulaire du porte-outil et de l'outil de coupe autour d'un axe perpendiculaire à l'axe de rotation de l'outil de coupe.

L'invention sera bien comprise à la lecture de la description suivante d'exemples de réalisation, en référence aux dessins annexés dans lesquels :

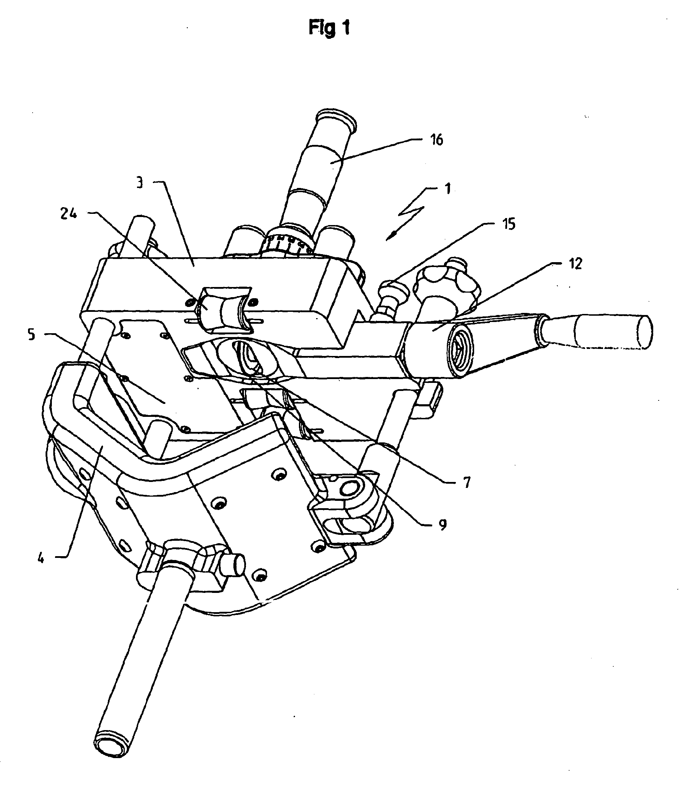

la figure 1 représente une vue partielle en perspective d'un appareil conforme à l'invention ;
la figure 2 représente une vue en coupe de l'appareil représenté à la figure 1 dans une position dans laquelle le tranchant de l'outil de coupe s'étend en affleurement du logement de passage du corps allongé ménagé par lesdites mâchoires ;
la figure 3 représente une vue en coupe du dispositif de la figure 1 dans une position dans laquelle l'outil de coupe fait saillie à l'intérieur du logement ménagé par lesdites mâchoires, de manière à entailler la matière constitutive du corps allongé à découper, entailler ou dénuder ;
la figure 4 représente une vue partielle en perspective d'un dispositif conforme à l'invention ;
la figure 5 représente une vue en perspective de l'ensemble constitué du porte-outil,de l'outil de coupe et de l'arbre d'entraînement en rotation dudit outil de coupe, dans une position dans laquelle l'outil de coupe est en position de coupe longitudinale ;

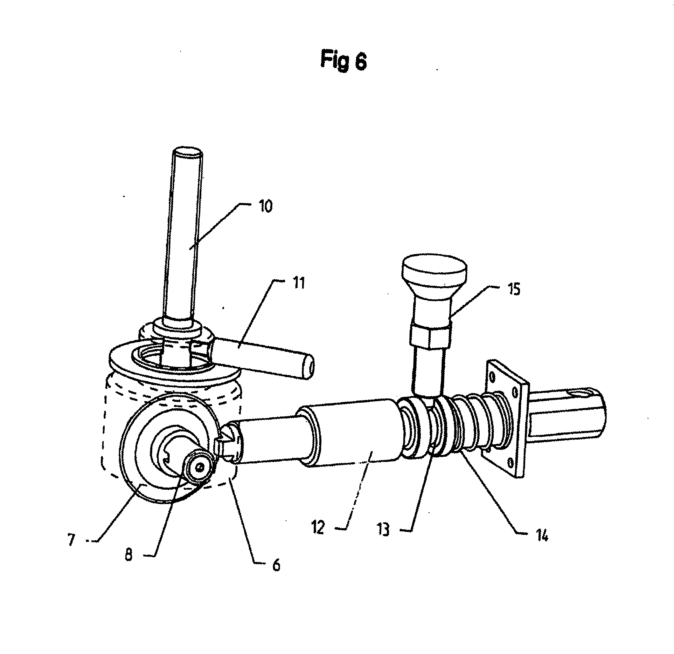

la figure 6 représente une vue en perspective de l'ensemble formé du porte-outil, de l'outil de coupe et de l'arbre d'entraînement de l'outil de coupe dans une position dans laquelle l'outil de coupe est en position de coupe circulaire ;
la figure 7 représente une vue en coupe de la figure 6 et ;
la figure 8 représente une vue en perspective de l'ensemble formé du porte-outil, de l'outil de coupe et de l'arbre d'entraînement en rotation de l'outil, ledit arbre étant en position débrayée.

Comme mentionné ci-dessus, l'appareil 1 objet de l'invention est plus particulièrement destiné à la découpe, l'entaille et/ou le dénudage au moins partiel d'un corps 2 allongé, tel qu'un câble multicouches concentriques, en particulier un câble électrique gainé, présentant en surface au moins une couche à découper, à entailler ou à dénuder.

De manière en soi connue, l'appareil 1 comprend au moins deux mâchoires 3, 4 délimitant un logement 5 de passage du corps 2 allongé, dans lequel ledit corps 2 est positionné axialement et au moins un porte-outil 6 à outil 7 de coupe circulaire rotatif. Dans les exemples représentés, les mâchoires 3 et 4 constitutives de l'appareil sont reliées l'une à l'autre par l'intermédiaire de tiges 21 le long desquelles les mâchoires peuvent coulisser, de manière à pouvoir être rapprochées ou écartées l'une de l'autre. En position rapprochée, lesdites mâchoires 3, 4 enserrent le corps 2 et maintiennent axialement ledit corps 2 à l'intérieur du logement 5 de passage, formé par l'espace laissé libre entre lesdites mâchoires 3, 4. L'une des mâchoires présente des moyens de centrage et d'appui du corps 2 allongé. Cette mâchoire, représentée en 4 aux figures, présente un profil transversal en V, les faces internes du V constituant la surface d'appui et de réception du corps 2 allongé. Ces faces internes sont formées par des rouleaux 23 montés libres à rotation. En regard des surfaces d'appui ménagées par la mâchoire 4, il est prévu une surface d'appui du corps 2 allongé ménagée sur la mâchoire 3. Dans ce cas, cette surface d'appui est formée par un train de galets 24, également montés libres en rotation sur ladite mâchoire 3.

Grâce à la présence de ces surfaces d'appui à contact roulant, le corps 2 allongé est guidé axialement à l'intérieur du logement 5 de passage ménagé par lesdites mâchoires 3, 4, tout en pouvant se déplacer aisément axialement à l'intérieur dudit passage. L'axe longitudinal du corps 2 allongé correspond à l'axe dit longitudinal du logement 5 de passage.

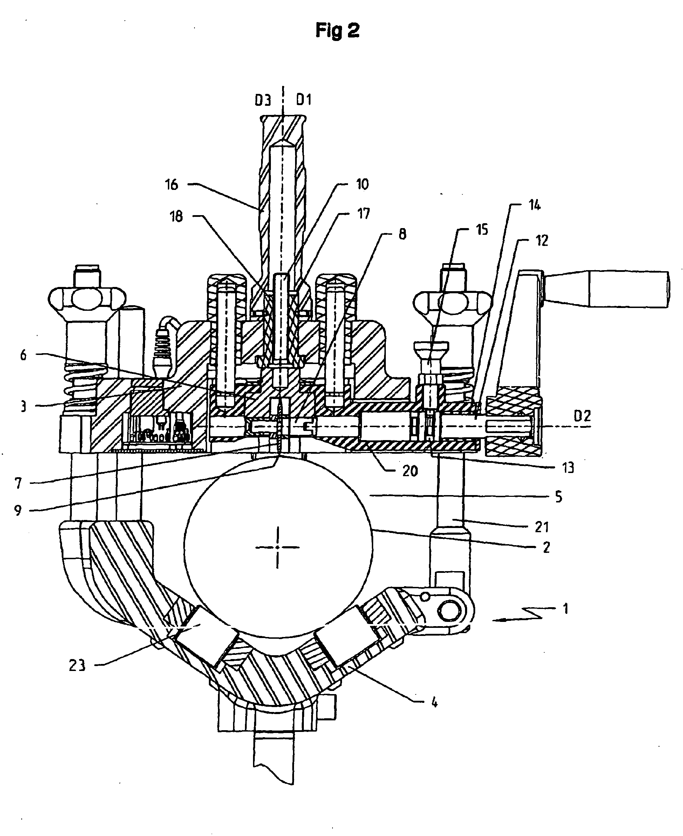

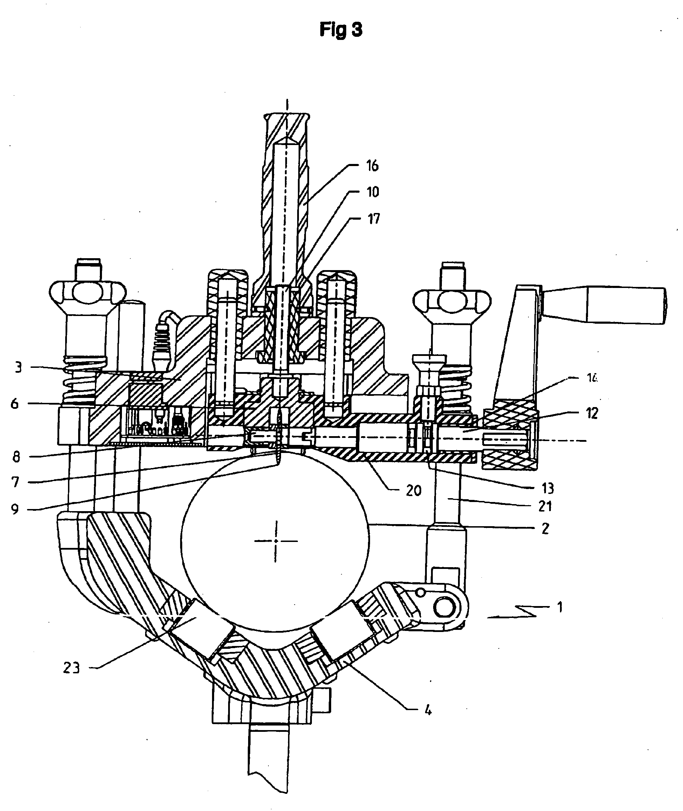

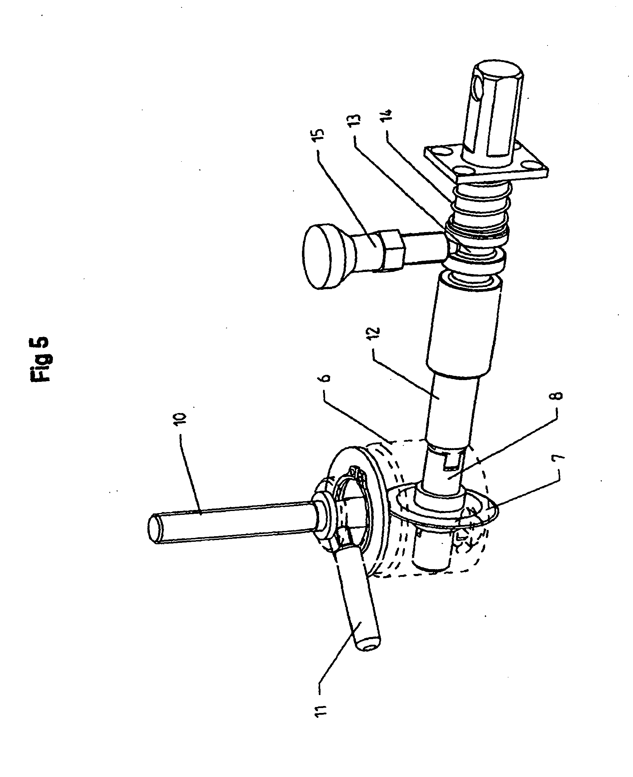

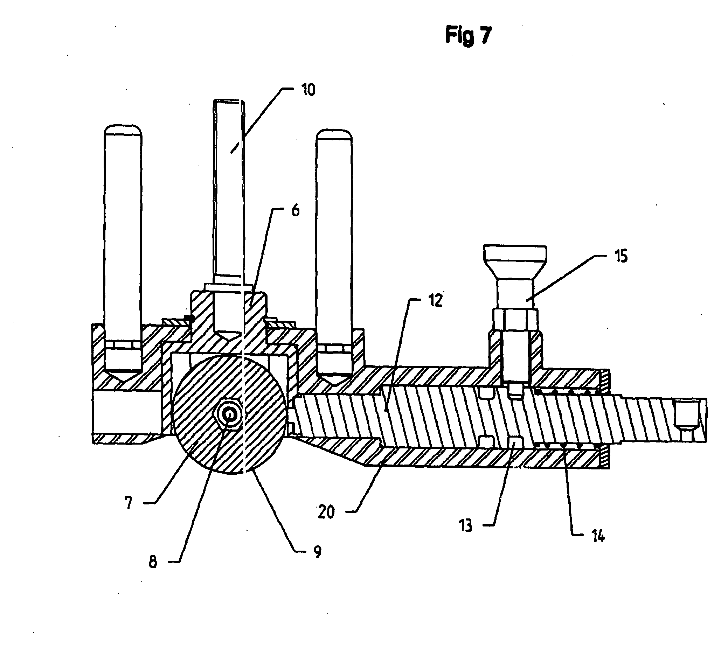

L'outil 7 de coupe se présente sous forme d'un outil de coupe circulaire, rotatif, en l'occurrence sous forme d'une lame circulaire rotative, positionné sur la mâchoire 3 entre deux trains de galets 24. Cet outil 7 de coupe est porté par un porte-outil 6 et est raccordé au dit porte-outil 6 par l'intermédiaire d'un tronçon d'axe représenté en 8 aux figures sur lequel la lame circulaire est montée fixe. Ce tronçon d'axe 8 qui est monté à rotation dans le porte-outil 6, est confondu avec l'axe D2 de rotation de l'outil 7 de coupe. De manière caractéristique à l'invention, à l'état stationnaire des mâchoires 3, 4, en particulier dans une position dans laquelle les mâchoires 3 et 4 sont rapprochées l'une de l'autre et enserrent le corps 2 allongé à découper, entailler ou dénuder en le maintenant positionné axialement à l'intérieur du logement 5 de passage délimité par lesdites mâchoires, l'outil 7 de coupe peut être entraîné en déplacement sans que les mâchoires 3, 4 ne bougent. Cet outil 7 de coupe peut ainsi être déplacé d'une part, entre une position (figure 2) dans laquelle le tranchant 9 de l'outil 7 de coupe s'étend en retrait ou en affleurement dudit logement 5 de passage et une position (figure 3) dans laquelle le tranchant 9 de l'outil 7 de coupe s'étend en saillie à l'intérieur dudit logement 5, d'autre part entre une position (figure 7) dite de coupe circulaire dans laquelle le tranchant 9 de l'outil 7 de coupe est orthogonal à l'axe longitudinal du corps 2 allongé à inciser ou à trancher, et une position de coupe (figure 5) dite longitudinale dans laquelle le tranchant 9 de l'outil 7 de coupe est parallèle à l'axe longitudinal du corps 2 allongé à trancher ou à inciser. Il doit être noté que l'axe longitudinal du corps allongé à inciser ou à trancher correspond à l'axe longitudinal du logement 5 de passage du corps 2 allongé, ménagé par lesdites mâchoires.

Pour permettre le passage entre une position dans laquelle le tranchant 9 de l'outil 7 de coupe s'étend en retrait ou en affleurement dudit logement 5 et une position dans laquelle le tranchant 9 de l'outil 7 de coupe s'étend en saillie à l'intérieur dudit logement 5, l'outil 7 de coupe est animé d'un mouvement axial suivant un axe D1 orthogonal à l'axe D2 de rotation de l'outil 7 de coupe circulaire rotatif.

Dans les exemples représentés, le porte-outil 6 et l'outil 7 de coupe sont animés d'un mouvement axial suivant un axe D1 orthogonal à l'axe D2 de rotation de l'outil 7 de coupe circulaire rotatif.

Pour permettre l'obtention d'un tel déplacement, le porte-outil 6 est équipé d'un axe 10 fileté coopérant avec le taraudage 18 d'une poignée 16 de manoeuvre, montée, libre en rotation et fixe axialement sur une mâchoire 3, de manière à provoquer, lors d'un entraînement en rotation de la poignée 16, un déplacement axial du porte-outil 6 et de l'outil 7 de coupe associé. Dans les exemples représentés, la poignée 16 de manoeuvre est évidée et reçoit à l'intérieur de son évidement une noix 17 taraudée, le taraudage 18 de ladite noix coopérant avec le filetage de l'axe 10 solidaire en déplacement du porte-outil 6. Ainsi lors de l'entraînement en rotation de la poignée de manoeuvre 16, le porte outil 6 et l'outil 7 de coupe associé sont déplacés suivant un axe correspondant à l'axe longitudinal de rotation de la poignée 16, pour permettre au tranchant 9 de l'outil 7 de coupe, de pénétrer plus ou moins dans le logement 5 de passage du corps 2 allongé ménagé entre lesdites mâchoires, de manière à venir entailler ou découper plus ou moins le corps 2 allongé, logé à l'intérieur dudit passage de logement 5.

Pour le passage entre une position dite de coupe circulaire, dans laquelle le tranchant 9 de l'outil 7 de coupe est perpendiculaire à l'axe longitudinal du corps 2 allongé à inciser ou à trancher et une position de coupe longitudinale, dans laquelle le tranchant 9 de l'outil 7 de coupe est parallèle à l'axe longitudinal du corps 2 allongé à inciser ou à trancher, l'outil 7 de coupe est animé d'un mouvement de rotation autour d'un axe D3, perpendiculaire à l'axe D2 de rotation de l'outil 7 de coupe circulaire rotatif. Dans les exemples représentés l'axe D3, autour duquel l'outil 7 de coupe est entraîné en rotation au cours du passage d'une position de coupe à une autre, est confondu avec l'axe D1 le long duquel l'outil 7 de coupe est mobile axialement. Dans les exemples représentés, outil 7 de coupe et porte-outil 6 sont montés solidaires en déplacement pour le passage d'une position de coupe à une autre et sont animés d'un mouvement de rotation autour d'un axe D3, perpendiculaire à l'axe D2 de rotation de l'outil 7 de coupe circulaire rotatif.

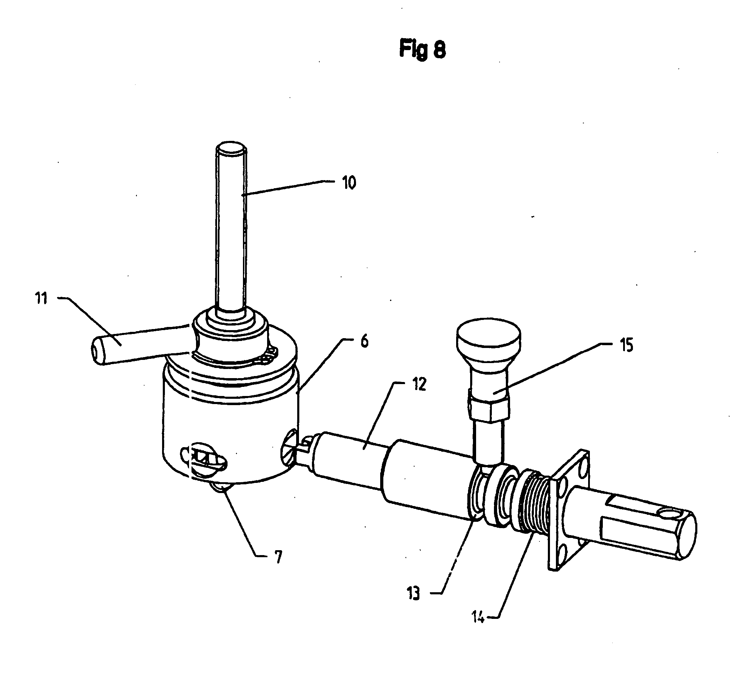

Cet entraînement en rotation de l'outil 7 de coupe et du porte-outil 6 associé, peut être obtenu de différentes manières qui seront décrites ci-après. En effet, l'outil 7 de coupe circulaire rotatif est, en position de coupe longitudinale, entraîné en rotation par un arbre rotatif, dit arbre 12 d'entraînement de l'outil 7. Cet arbre 12 est ici constitué par un arbre de manivelle à l'extrémité duquel est rapporté un levier coudé de manivelle, représenté en 19 aux figures. L'actionnement de la manivelle permet donc d'entraîner l'outil 7 de coupe autour de son axe D2 de rotation, la lame de coupe circulaire étant centrée sur cet axe de rotation. Bien évidemment cet entraînement en rotation aurait pu également être réalisé de manière automatique. Cet arbre 12 d'entraînement de l'outil 7 de coupe est un arbre, solidaire en déplacement de l'outil 7, lors du déplacement de l'outil 7 pour faire pénétrer plus ou moins le tranchant 9 de l'outil 7 dans le logement 5 de passage. En d'autres termes, l'arbre 12 d'entraînement de l'outil de coupe, est un arbre mobile suivant l'axe D1 ou, en d'autres termes, suivant une direction parallèle à la direction de déplacement des mâchoires dans le sens d'un rapprochement ou d'un écartement au cours du déplacement axial de l'outil 7 de coupe et du porte-outil 6 associé, pour permettre le passage de l'outil 7 de coupe d'une position dans laquelle il s'étend en retrait ou en affleurement du logement 5 à une position dans laquelle le tranchant 9 de l'outil 7 de coupe s'étend en saillie à l'intérieur dudit logement 5. Ainsi l'arbre 12 d'entraînement de l'outil 7 de coupe suit les déplacements axiaux de l'outil 7 de coupe et du porte-outil 6 associé. Arbre 12, outil 7 de coupe et porte-outil 6 associé forment donc un ensemble solidaire en déplacement suivant l'axe D1 qui correspond à la direction de déplacement des mâchoires dans le sens d'un rapprochement ou d'un écartement. Pour permettre un tel déplacement, on note que l'arbre 12 est logé à l'intérieur d'un palier d'arbre représenté en 20 aux figures. Le bloc porte-outil 6 est monté mobile en rotation autour de l'axe D3 par rapport au palier 20 d'arbre. Ce palier 20 d'arbre est conformé pour être monté libre et guidé en coulissement par l'intermédiaire de tiges raccordant le palier 20 d'arbre à la mâchoire 3. Ce palier 20 d'arbre est monté solidaire en translation du bloc porte-outil 6 suivant l'axe D1 de manière à permettre audit palier 20 d'arbre de suivre les déplacements axiaux du bloc porte-outil 6, de sorte que l'arbre 12 d'entraînement de l'outil 7 de coupe est toujours positionné en alignement avec l'outil 7 de coupe indépendamment du positionnement relatif de l'outil 7 de coupe par rapport à la mâchoire 3 qui porte ledit outil 7 de coupe. Ainsi le déplacement axial du porte-outil 6 et de l'outil 7 de coupe associé suivant D1 provoque, en parallèle, un déplacement du palier 20 de l'arbre 12 d'entraînement de l'outil de coupe suivant D1 et donc parallèlement un déplacement de l'arbre 12 d'entraînement en rotation de l'outil 7 de coupe. Cet arbre 12 d'entraînement de l'outil 7 de coupe est par ailleurs, un arbre débrayable apte à passer d'une position débrayée, conforme à celle représentée à la figure 8, à une position embrayée dans laquelle il vient en prise avec le porte-outil 6, comme l'illustre la figure 7, pour immobiliser angulairement le porte-outil 6 et l'outil 7 associé mobiles autour de l'axe D3, en position de coupe circulaire de l'outil 7 de coupe, et avec l'outil 7 de coupe comme l'illustre la figure 5, en position de coupe longitudinale dudit outil 7, pour, parallèlement à l'immobilisation angulaire du porte-outil 6 et de l'outil 7 autour de D3, entraîner en rotation l'outil 7 de coupe autour de l'axe D2 généralement parallèle et confondu avec l'axe d'entraînement en rotation de l'arbre 12. Lorsque l'arbre 12 d'entraînement de l'outil 7 de coupe vient en prise avec l'outil 7 de coupe, il est couplé au tronçon d'arbre 8 portant la lame 7 circulaire, ce tronçon d'arbre 8 étant confondu avec l'axe D2 de rotation de ladite lame. Le passage de la position embrayée à la position débrayée de l'arbre 12 d'entraînement permet de déplacer librement l'outil 7 de coupe et le porte-outil 6 associé pour les amener dans l'une ou l'autre desdites positions de coupe. Le passage d'une position de coupe à une autre de l'outil de coupe peut être commandé soit à partir d'une poignée 11 de manoeuvre supplémentaire équipant le porte-outil 6, soit à partir de la poignée 16 de manoeuvre servant au déplacement axial de l'outil 7 de coupe. En effet, en position débrayée de l'arbre 12 d'entraînement de l'outil 7 de coupe, la rotation de la poignée 16 entraîne en rotation le porte-outil 6 et l'outil 7 de coupe pour le passage d'une position de coupe à une autre. Dès le passage en position embrayée de l'arbre 12, la poursuite d'un entraînement en rotation de la poignée 16 de manoeuvre provoque un déplacement axial suivant D1 du porte-outil 6, de l'outil 7 de coupe et de l'arbre 12, le porte-outil 6 étant immobilisé en rotation par l'arbre 12.

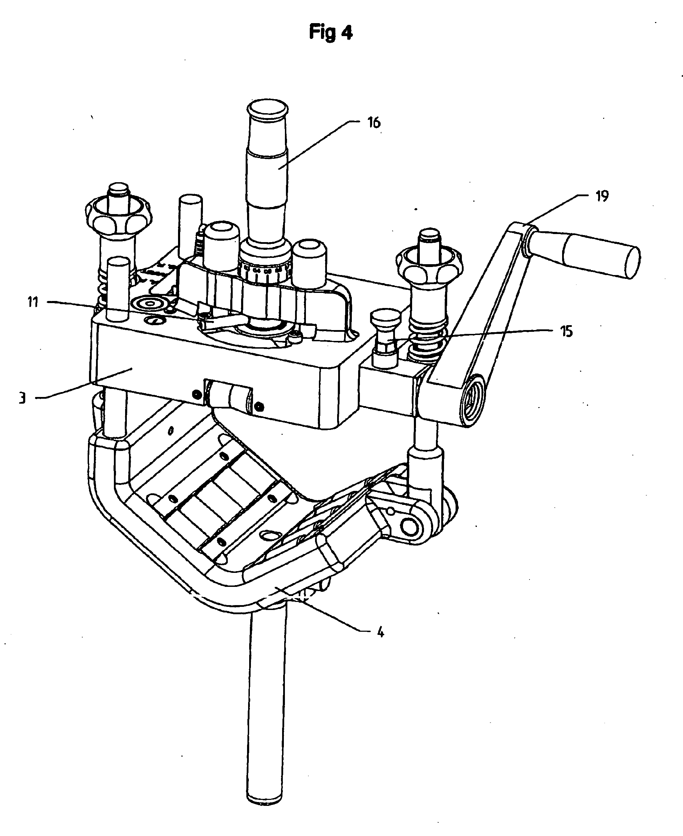

Comme l'illustre la figure 4, ce porte-outil 6 peut être équipé d'une poignée 11 de manoeuvre supplémentaire radiale à l'axe 10 fileté équipant le porte-outil 6 pour le passage de l'outil 7 de coupe et du porte-outil 6 associé d'une position de coupe à une autre. Toutefois, en position débrayée de l'arbre 12 d'entraînement, position dans laquelle cet arbre 12 peut être maintenu par l'intermédiaire d'un organe 15 de verrouillage radial audit arbre, cet organe 15 de verrouillage venant se loger dans une gorge 13 annulaire dudit arbre 12 d'entraînement, il est également possible d'entraîner en déplacement l'outil de coupe 7 et le porte-outil 6 associé, d'une position de coupe à une autre par simple entraînement en rotation de la poignée 16 de manoeuvre autour de son axe de rotation. Il en résulte une simplicité de l'ensemble. Du fait d'une absence de résistance de l'arbre 12 d'entraînement qui est en position débrayée, l'ensemble poignée 16 de manoeuvre, axe 10 fileté, porte-outil 6 et outil 7 de coupe est entraîné en rotation pour permettre le passage d'une position de coupe à une autre. Une fois ce passage d'une position de coupe à une autre opéré, l'organe 15 de verrouillage peut être de nouveau actionné. L'arbre 12 d'entraînement est alors rappelé en position embrayée par l'intermédiaire d'un ressort 14 monté coaxial audit arbre 12, et immobilisé axialement par l'intermédiaire de ce même organe 15 de verrouillage radial audit arbre 12. Cet organe 15 de verrouillage vient à nouveau se loger dans une gorge 13 annulaire de l'arbre 12 d'entraînement, cette gorge 13 annulaire étant parallèle à la gorge qui sert à l'immobilisation de l'arbre 12 en position débrayée.

Enfin l'appareil 1 peut encore comporter des moyens d'ajustement du déplacement de l'outil 7 de coupe entre une position dans laquelle le tranchant 9 de l'outil 7 de coupe s'étend en retrait ou en affleurement du logement 5, et une position dans laquelle le tranchant 9 de l'outil 7 de coupe s'étend en saillie à l'intérieur dudit logement 5. Ces moyens incluent un émetteur apte à émettre un signal auditif ou visuel lors d'un contact du tranchant 9 de l'outil 7 de coupe avec une couche conductrice du corps 2 allongé à dénuder, entailler ou découper. Il doit être noté que pour la réalisation d'une coupe circulaire, l'appareil et le corps 2 allongé à découper sont animés d'un mouvement relatif de rotation. Pour la réalisation d'une coupe longitudinale, l'appareil 1 et le corps 2 allongé sont animés d'un mouvement relatif de translation, le corps 2 allongé, tendant à se déplacer axialement à l'intérieur dudit passage au fur et à mesure de l'entraînement en rotation de l'outil 7 de coupe circulaire autour de son axe D2.

Le fonctionnement d'un tel appareil 1 est le suivant : dans un premier temps les mâchoires 3 et 4 sont écartées l'une de l'autre pour permettre le positionnement du corps 2 allongé à découper, à entailler, ou à dénuder, à l'intérieur du logement 5 de passage ménagé entre les surfaces d'appui desdites mâchoires. Une fois le corps 2 allongé introduit dans ledit passage et disposé axialement dans ce dernier, les mâchoires 3 et 4 sont rapprochées l'une de l'autre et immobilisées dans une position dans laquelle elles enserrent le corps 2 allongé. Dans cette position le tranchant 9 de l'outil 7 de coupe s'étend en retrait ou en affleurement du logement 5. L'outil 7 de coupe est alors positionné dans la position de coupe à effectuer. On débute généralement par une coupe longitudinale. L'outil 7 de coupe est donc déplacé par la rotation de la poignée 16 de manoeuvre pour pénétrer dans ledit logement 5 et venir entailler, en particulier la matière constitutive de la surface du corps 2 allongé. Une fois le réglage de la profondeur de coupe opéré, cette profondeur de coupe étant fonction du niveau de pénétration du tranchant de l'outil 7 de coupe à l'intérieur dudit logement 5, l'opération de coupe proprement dite peut commencer. L'outil 7 de coupe est alors entraîné en rotation par l'arbre 12 à l'aide de la manivelle 19, l'arbre 12 étant en prise directe avec l'outil 7 de coupe. Lorsque la coupe longitudinale est achevée, l'outil 7 de coupe est retiré du passage 5 par déplacement axial à l'aide de la poignée 16 de manoeuvre. L'arbre 12 d'entraînement est amené en position débrayée et l'outil 7 de coupe est déplacé depuis sa position de coupe longitudinale à sa position de coupe circulaire, soit par l'intermédiaire de la poignée 16 de manoeuvre, soit par l'intermédiaire de la poignée 11 de manoeuvre supplémentaire. L'arbre 12 d'entraînement est ensuite ramené en position embrayée dans laquelle il vient en prise avec le porte-outil 6 pour immobiliser ce dernier. La coupe circulaire peut alors commencer. A cet effet, le corps 2 allongé et l'appareil sont animés d'un déplacement relatif en rotation. Une fois la coupe circulaire achevée, les mâchoires 3 et 4 peuvent être écartées pour libérer le corps 2 allongé. On constate ainsi que les opérations de coupe longitudinale et circulaire ont pu être opérées sans déplacer les mâchoires 3 et 4 dans le sens d'un rapprochement ou d'un écartement afin d'éviter toute erreur de positionnement du corps lors du passage d'une position de coupe à une autre.

## Revendications

1. Appareil (1) pour la découpe, l'entaille ou le dénudage au moins partiel d'un corps (2) allongé, tel qu'un câble multi couches concentriques, en particulier un câble électrique gainé, présentant en surface au moins une couche à découper, entailler ou dénuder, ledit appareil (1) et le corps (2) allongé à découper étant animés au moins d'un mouvement relatif de rotation et /ou de translation, ledit appareil (1) comprenant au moins deux mâchoires (3, 4) délimitant un logement (5) de passage du corps (2) allongé dans lequel ledit corps (2) est positionné axialement, et au moins un porte-outil (6) à outil (7) de coupe, cet outil (7) de coupe, monté mobile sur l'une (3) des mâchoires (3, 4), étant, à l'état stationnaire desdites mâchoires (3, 4), apte à être entraîné en déplacement d'une part, entre une position dans laquelle le tranchant (9) de l'outil (7) de coupe s'étend en retrait ou en affleurement dudit logement (5) et une position dans laquelle le tranchant (9) de l'outil (7) de coupe s'étend en saillie à l'intérieur dudit logement (5), d'autre part, entre une position dite de coupe circulaire dans laquelle le tranchant (9) de l'outil (7) de coupe est orthogonal à l'axe longitudinal du corps (2) allongé à inciser ou à trancher, et une position dite de coupe longitudinale dans laquelle le tranchant (9) de l'outil (7) de coupe est parallèle à l'axe longitudinal du corps (2) allongé,
**caractérisé en ce que** l'outil (7) de coupe est un outil (7) de coupe circulaire rotatif qui, en position de coupe longitudinale, est entraîné en rotation par un arbre rotatif dit arbre (12) d'entraînement de l'outil (7), tel qu'un arbre de manivelle, cet arbre (12) étant, avec le porte-outil (6) et l'outil (7) de coupe, monté, à l'état stationnaire des mâchoires (3, 4), mobile suivant un axe (D1) orthogonal à l'axe (D2) de rotation de l'outil (7) de coupe pour le passage de l'outil (7) de coupe d'une position dans laquelle le tranchant (9) de l'outil (7) de coupe s'étend en retrait ou en affleurement dudit logement (5) à une position dans laquelle le tranchant (9) de l'outil (7) de coupe s'étend en saillie à l'intérieur dudit logement (5) et inversement, cet arbre (12) rotatif étant en outre un arbre débrayable, mobile axialement suivant une direction parallèle à l'axe de rotation dudit arbre entre une position débrayée dans laquelle le porte-outil (6) et l'outil (7) de coupe sont montés, indépendamment de l'arbre (12), mobiles en déplacement angulaire autour d'un axe (D3) perpendiculaire à l'axe (D2) de rotation de l'organe (7) de coupe pour le passage d'une position de coupe à une autre, et une position embrayée dans laquelle l'arbre (12) est en prise, avec le porte-outil (6), en position de coupe circulaire dudit outil (7) de coupe, et avec l'outil (7) de coupe, en position de coupe longitudinale dudit outil (7) de coupe.

2. Appareil (1) pour la découpe selon la revendication 1,
**caractérisé en ce que**, en position embrayée, l'arbre (12) rotatif forme un verrouillage en déplacement angulaire du porte-outil (6) et de l'organe (7) de coupe autour de l'axe (D3) perpendiculaire à l'axe (D2) de rotation de l'outil (7) de coupe circulaire rotatif, et un organe de retenue du porte-outil (7) et de l'organe (6) de coupe dans la position de coupe choisie.

3. Appareil (1) pour la découpe selon l'une des revendications 1 et 2,
**caractérisé en ce que** l'arbre (12) d'entraînement en rotation de l'outil (7) de coupe est rappelé en position embrayée et est immobilisé axialement par l'intermédiaire d'un organe (15) de verrouillage radial audit arbre (12).

4. Appareil (1) pour la découpe selon la revendication 3,
**caractérisé en ce que** l'organe (15) de verrouillage de l'arbre (12) d'entraînement vient se loger dans une gorge (13) annulaire dudit arbre (12) d'entraînement.

5. Appareil (1) pour la découpe selon l'une des revendications 1 à 4,
**caractérisé en ce que** l'appareil (1) comporte une poignée (16) de manoeuvre montée libre en rotation et fixe axialement sur une mâchoire (3), poignée (16) de manoeuvre et porte-outil (6) étant équipés l'un d'un taraudage (18), l'autre d'un axe (10) fileté, coopérant entre eux de manière à provoquer, en position embrayée de l'arbre (12) d'entraînement en rotation de l'outil (7) de coupe, un déplacement axial du porte-outil (6), de l'outil (7) de coupe et de l'arbre (12) d'entraînement en rotation de l'outil de coupe suivant l'axe (D1) perpendiculaire à l'axe (D2) de rotation de l'outil (7) de coupe.

6. Appareil (1) pour la découpe selon la revendication 5,
**caractérisé en ce que** la poignée (16) de manoeuvre est un organe de commande polyvalent asservi à la position embrayée/débrayée de l'arbre (12) d'entraînement en rotation de l'outil (7) de coupe, ladite poignée (16) de manoeuvre formant, en position embrayée de l'arbre (12), un organe de commande d'entraînement en déplacement axial du porte-outil (6), de l'outil (7) de coupe et de l'arbre (12) suivant l'axe (D1) perpendiculaire à l'axe (D2) de rotation de l'outil (7) de coupe et, en position débrayée de l'arbre (12), un organe de commande en déplacement angulaire du porte-outil (6) et de l'outil (7) de coupe autour d'un axe (D3) perpendiculaire à l'axe (D2) de rotation de l'outil (7) de coupe.

7. Appareil (1) pour la découpe selon la revendication 5,
**caractérisé en ce que** le porte-outil (6) est équipé, pour le passage de l'outil (7) de coupe et du porte-outil (6) associé d'une position de coupe à une autre, d'une poignée (11) de manoeuvre supplémentaire radiale à l'axe (10) fileté équipant le porte-outil (6).

8. Appareil (1) pour la découpe selon l'une des revendications 1 à 7,
**caractérisé en ce que**, pour le passage entre une position dans laquelle le tranchant (9) de l'outil (7) de coupe s'étend en retrait ou en affleurement dudit logement (5) et une position dans laquelle le tranchant (9) de l'outil (7) de coupe s'étend en saillie à l'intérieur dudit logement (5), l'outil (7) de coupe est animé d'un mouvement axial suivant un axe (D1) orthogonal à l'axe (D2) de rotation de l'outil (7) de coupe circulaire rotatif et **en ce que**, pour le passage entre une position de coupe circulaire dans laquelle le tranchant (9) de l'outil (7) de coupe est perpendiculaire à l'axe longitudinal du corps (2) allongé à inciser ou à trancher, et une position de coupe longitudinale dans laquelle le tranchant (9) de l'outil de coupe est parallèle à l'axe longitudinal du corps (2) allongé à inciser ou à trancher, l'outil (7) de coupe est animé d'un mouvement de rotation autour d'un axe (D3) perpendiculaire à l'axe (D2) de rotation de l'outil (7) de coupe circulaire rotatif.

9. Appareil (1) pour la découpe selon la revendication 8,
**caractérisé en ce que** l'axe (D3) autour duquel l'outil (7) de coupe est entraîné en rotation au cours du passage d'une position de coupe à une autre est confondu avec l'axe (D1) le long duquel l'outil (7) de coupe est mobile axialement.

## Claims

1. An apparatus (1) for cutting, notching or at least partial stripping an elongated body (2), such as a concentric multilayer cable, in particular a sheathed power cable, having at the surface at least one layer to be cut, notched, or stripped, said apparatus (1) and the elongated body (2) to be cut being animated by at least one relative rotational and/or translatory motion, said apparatus (1) comprising at least two jaws (3, 4) delimiting a cradle (5) for passing the elongated body (2), in which said body (2) is positioned axially, and at least one tool holder (6) for a cutting tool (7), wherein this cutting tool (7), being movably mounted on one (3) of the jaws (3, 4), in the stationary state of said jaws (3, 4), is adapted to be driven in displacement on the one hand between a position, in which the cutting edge (9) of the cutting tool (7) is extending in recess of or flush with said cradle (5), and a position, in which the cutting edge (9) of the cutting tool (7) is extending protrudingly inside said cradle (5) on the other hand, between a so-called circular cutting position, in which the cutting edge (9) of the cutting tool (7) is orthogonal to the longitudinal axis of the elongated body (2) to be incised or sectioned, and a so-called longitudinal cutting position, in which the cutting edge (9) of the cutting tool is parallel to the longitudinal axis of the elongated body (2),
**characterized in that** the cutting tool (7) is a rotatable circular cutting tool (7) which, in the longitudinal cutting position, is driven in rotation by a rotary shaft, a so-called shaft (12) for driving the tool (7), such as a crank shaft, wherein this shaft (12) together with the tool holder (6) and the cutting tool (7) in the stationary state of the jaws (3, 4) is mounted movably along an axis (D1), which is orthogonal to the rotational axis (D2) of the cutting tool (7) for the transition of the cutting tool (7) from a position, in which the cutting edge (9) of the cutting tool (7) is extending in recess of or flush with said cradle (5), into a position, in which the cutting edge (9) of the cutting tool (7) is extending protrudingly inside said cradle (5), and vice versa, this rotary shaft (12) further being a disengaging shaft, axially movable in a direction parallel to the rotational axis of said shaft between a disengaged position, in which the tool holder (6) and the cutting tool (7) are mounted independently from the shaft (12) to be movable in angular displacement around an axis (D3), which is perpendicular to the rotational axis (D2) of the cutting member (7), for the transition from one cutting position to another, and an engaged position, in which the shaft (12) is engaged with the tool holder (6), in the circular cutting position of said cutting tool (7), and with the cutting tool (7) in the longitudinal cutting position of said cutting tool (7).

2. The cutting apparatus (1) according to claim 1, **characterized in that** in the engaged position the rotary shaft (12) forms an angular displacement lock of the tool holder (6) and the cutting member (7) around the axis (D3) perpendicular to the rotational axis (D2) of the rotatable circular cutting tool (7) , and a holding member of the tool holder (7) and the cutting member (6) in the chosen cutting position.

3. The cutting apparatus (1) according to any of claims 1 and 2, **characterized in that** the rotary drive shaft (12) of the cutting tool (7) is returned to the engaged position and axially blocked via a locking member (15) radial to said shaft (12) .

4. The cutting apparatus (1) according to claim 3, **characterized in that** the locking member (15) of the drive shaft (12) is seated in an annular groove (13) of said drive shaft (12) .

5. The cutting apparatus (1) according to any of claims 1 to 4, **characterized in that** the apparatus (1) comprises an operating handle (16), mounted free to rotate and axially fixed on one jaw (3), wherein one of the operating handle (16) and the tool holder (6) is fitted with a female thread (18) and the other with a threaded axis (10), cooperating together so as to cause in the engaged position of the rotary drive shaft (12) of the cutting tool (7) an axial displacement of the tool holder (6), the cutting tool (7), and the rotary drive shaft (12) of the cutting tool along the axis (D1) which is perpendicular to the rotational axis (D2) of the cutting tool (7) .

6. The cutting apparatus (1) according to claim 5, **characterized in that** the operating handle (16) is a versatile control member, controlled by the engaged/disengaged position of the rotary drive shaft (12) of the cutting tool (7), said operating handle (16) in the engaged position of the shaft (12) forming a control member for an axial displacement of the tool holder (6), the cutting tool (7), and the shaft (12) along the axis (D1), which is perpendicular to the rotational axis (D2) of the cutting tool (7), and in the disengaged position of the shaft (12) a control member for an angular displacement of the tool holder (6) and the cutting tool (7) around an axis (D3), which is perpendicular to the rotational axis (D2) of the cutting tool (7).

7. The cutting apparatus (1) according to claim 5, **characterized in that** the tool holder (6), for the transition of the cutting tool (7) and the associated tool holder (6) from one cutting position to another, is fitted with an additional operating handle (11), which is radial to the threaded axis (10) with which the tool holder (6) is fitted.

8. The cutting apparatus (1) according to any of claims 1 to 7, **characterized in that** for the transition between a position, in which the cutting edge (9) of the cutting tool (7) is extending in recess of or flush with said cradle (5), and a position, in which the cutting edge (9) of the cutting tool (7) is extending protrudingly inside said cradle (5), the cutting tool (7) is animated by an axial movement along an axis (D1), which is orthogonal to the rotational axis (D2) of the rotatable circular cutting tool (7), and **in that** for the transition between a circular cutting position, in which the cutting edge (9) of the cutting tool (7) is perpendicular to the longitudinal axis of the elongated body (2) to be incised or sectioned, and a longitudinal cutting position, in which the cutting edge (9) of the cutting tool is parallel to the longitudinal axis of the elongated body (2) to be incised or sectioned, the cutting tool (7) is animated by a rotational movement around an axis (D3), which is perpendicular to the rotational axis (D2) of the rotatable circular cutting tool (7) .

9. The cutting apparatus according to claim 8, **characterized in that** the axis (D3), around which the cutting apparatus (7) is rotationally driven during the transition from one cutting position to another coincides with the axis (D1), along which the cutting tool (7) is axially movable.

## Patentansprüche

1. Gerät (1) zum Abschneiden, Aufschlitzen oder mindestens teilweisen Abisolieren eines länglichen Körpers (2), wie etwa eines Kabels aus mehreren konzentrischen Lagen, insbesondere eines ummantelten Stromkabels, der an der Oberfläche mindestens eine abzuschneidende, aufzuschlitzende oder abzuisolierende Lage aufweist, wobei das Gerät (1) und der abzuschneidende längliche Körper (2) mindestens durch eine relative Dreh- und/oder Translationsbewegung bewegt wird, wobei das Gerät (1) mindestens zwei Backen (3, 4), die eine Aufnahme (5) zum Durchgang des länglichen Körpers (2) begrenzen, in welcher der Körper (2) axial positioniert ist, und mindestens einen Werkzeughalter (6) für ein Schneidwerkzeug (7) umfasst, wobei dieses Schneidwerkzeug (7), das beweglich auf einer (3) der Backen (3, 4) montiert ist, im feststehenden Zustand der Backen (3, 4) dazu geeignet ist, einerseits in Verschiebung zwischen einer Position, in der die Schneide (9) des Schneidwerkzeugs (7) sich von der Aufnahme (5) zurückgesetzt oder dazu bündig erstreckt, und andererseits einer Position, in der die Schneide (9) des Schneidwerkzeugs (7) sich im Innern der Aufnahme (5) vorspringend erstreckt, zwischen einer so genannten Kreisschnittposition, in der die Schneide (9) des Schneidwerkzeugs (7) zu der Längsachse des einzuschneidenden oder abzutrennenden länglichen Körpers (2) orthogonal ist, und einer so genannten Längsschnittposition, in der die Schneide (9) des Schneidwerkzeugs (7) zur Längsachse des länglichen Körpers (2) parallel ist, angetrieben zu werden,
**dadurch gekennzeichnet, dass** das Schneidwerkzeug (7) ein drehbares Kreisschneidwerkzeug ist, das in der Längsschnittposition von einer Drehwelle, die als Welle (12) zum Antreiben des Werkzeugs (7) bezeichnet wird, wie etwa eine Kurbelwelle, drehmäßig angetrieben wird, wobei diese Welle (12) mit dem Werkzeughalter (6) und dem Schneidwerkzeug (7) im feststehenden Zustand der Backen (3, 4) an einer Achse (D1) entlang, die zur Drehachse (D2) des Schneidwerkzeugs (7) orthogonal ist, für den Übergang des Schneidwerkzeugs (7) von einer Position, in der die Schneide (9) des Schneidwerkzeugs (7) sich von der Aufnahme (5) zurückgesetzt oder dazu bündig erstreckt, in eine Position, in der die Schneide (9) des Schneidwerkzeugs (7) sich im Innern der Aufnahme (5) vorspringend erstreckt, und umgekehrt beweglich montiert ist, wobei diese Drehwelle (12) ferner eine ausrückbare Welle ist, die in einer Richtung parallel zur Drehachse der Welle zwischen einer ausgerückten Position, in welcher der Werkzeughalter (6) und das Schneidwerkzeug (7) unabhängig von der Welle (12) in Winkelverschiebung um eine Achse (D3), die zur Drehachse (D2) des Schneidorgans (7) rechtwinklig ist, für den Übergang von einer Schnittposition auf die andere beweglich montiert sind, und einer eingerückten Position, in der die Welle (12) in der Kreisschnittposition des Schneidwerkzeugs (7) mit dem Werkzeughalter (6) und in der Längsschnittposition des Schneidwerkzeugs (7) mit dem Schneidwerkzeug (7) in Eingriff steht, axial beweglich ist.

2. Schneidgerät (1) nach Anspruch 1, **dadurch gekennzeichnet, dass** die Drehwelle (12) in der eingerückten Position eine Winkelverschiebungssperre des Werkzeughalters (6) und des Schneidorgans (7) um die Achse (D3), die zur Drehachse (D2) des drehbaren Kreisschneidwerkzeugs (7) rechtwinklig ist, herum und ein Halteorgan des Werkzeughalters (7) und des Schneidorgans (6) in der gewählten Schnittposition bildet.

3. Schneidgerät (1) nach einem der Ansprüche 1 und 2, **dadurch gekennzeichnet, dass** die Welle (12) zum Drehantrieb des Schneidwerkzeugs (7) in die eingerückte Position zurückgestellt wird und axial über ein zu der Welle (12) radiales Sperrorgan (15) festgestellt wird.

4. Schneidgerät (1) nach Anspruch 3, **dadurch gekennzeichnet, dass** das Sperrorgan (15) der Antriebswelle (12) in einer ringförmigen Auskehlung (13) der Antriebswelle (12) zu liegen kommt.

5. Schneidgerät (1) nach einem der Ansprüche 1 bis 4, **dadurch gekennzeichnet, dass** das Gerät (1) einen Bedienungsgriff (16) umfasst, der frei drehend und axial fest auf einer Backe (3) montiert ist, wobei von dem Bedienungsgriff (16) und dem Werkzeughalter (6) einer mit einem Innengewinde (18) und der andere mit einer Gewindeachse (10) ausgestattet ist, die miteinander zusammenwirken, um in der eingerückten Position der Welle (12) zum Drehantrieb des Schneidwerkzeugs (7) eine Axialverschiebung des Werkzeughalters (6) zu verursachen, wobei das Schneidwerkzeug (7) und die Welle (12) zum Drehantrieb des Schneidwerkzeugs der Achse (D1) folgen, die zur Drehachse (D2) des Schneidwerkzeugs (7) rechtwinklig ist.

6. Schneidgerät (1) nach Anspruch 5, **dadurch gekennzeichnet, dass** der Bedienungsgriff (16) ein vielseitiges Steuerorgan ist, das von der eingerückten/ausgerückten Position der Welle (12) zum Drehantrieb des Schneidwerkzeugs (7) geregelt wird, wobei der Bedienungsgriff (16) in der eingerückten Position der Welle (12) ein Steuerorgan für einen Antrieb in Axialverschiebung des Werkzeughalters (6), des Schneidwerkzeugs (7) und der Welle (12) an der Achse (D1) entlang, die zu der Drehachse (D2) des Schneidwerkzeugs (7) rechtwinklig ist, und in der ausgerückten Position der Welle (12) ein Steuerorgan für eine Winkelverschiebung des Werkzeughalters (6) und des Schneidwerkzeugs (7) um eine Achse (D3) herum, die zur Drehachse (D2) des Schneidwerkzeugs (7) rechtwinklig ist, bildet.

7. Schneidgerät (1) nach Anspruch 5, **dadurch gekennzeichnet, dass** der Werkzeughalter (6) für den Übergang des Schneidwerkzeugs (7) und des dazugehörigen Werkzeughalters (6) von einer Schnittposition in die andere mit einem zusätzlichen Bedienungsgriff (11) versehen ist, der zur Gewindeachse (10), die den Werkzeughalter (6) ausstattet, radial ist.

8. Schneidgerät (1) nach einem der Ansprüche 1 bis 7, **dadurch gekennzeichnet, dass** für den Übergang zwischen einer Position, in der die Schneide (9) des Schneidwerkzeugs (7) sich von der Aufnahme (5) zurückgesetzt oder dazu bündig erstreckt, und einer Position, in der die Schneide (9) des Schneidwerkzeugs (7) im Innern der Aufnahme (5) vorspringend erstreckt, das Schneidwerkzeug (7) durch eine Axialbewegung an einer Achse (D1) entlang, die zur Drehachse (D2) des drehbaren Kreisschneidwerkzeugs (7) orthogonal ist, bewegt wird, und dass für den Übergang zwischen einer Kreisschnittposition, in der die Schneide (9) des Schneidwerkzeugs (7) zur Längsachse des einzuschneidenden oder abzutrennenden länglichen Körpers (2) rechtwinklig ist, und einer Längsschnittposition, in der die Schneide (9) des Schneidwerkzeugs zur Längsachse des einzuschneidenden oder abzutrennenden länglichen Körpers (2) parallel ist, das Schneidwerkzeug (7) durch eine Drehbewegung um eine Achse (D3) herum, die zur Drehachse (D2) des drehbaren Kreisschneidwerkzeugs (7) rechtwinklig ist, bewegt wird.

9. Schneidgerät nach Anspruch 8, **dadurch gekennzeichnet, dass** die Achse (D3), um die herum das Schneidgerät (7) während des Übergangs von einer Schnittposition in die andere drehmäßig angetrieben wird, mit der Achse (D1) zusammenfällt, an der entlang das Schneidwerkzeug (7) axial beweglich ist.
